(19) Europäisches Patentamt
European Patent Office
Office européen des brevets

(11) Publication number: **0 299 789 B1**

(12) **EUROPEAN PATENT SPECIFICATION**

(45) Date of publication of patent specification: **20.05.92**

(51) Int. Cl.$^5$: **C09K 19/20**, C07C 69/88, C07C 69/94

(21) Application number: **88306506.2**

(22) Date of filing: **15.07.88**

# (54) Mesomorphic compound having alkyl beta-hydroxycarboxylate as chiral group and liquid crystal composition containing same.

(30) Priority: **17.07.87 JP 178524/87**
**20.07.87 JP 180848/87**

(43) Date of publication of application:
**18.01.89 Bulletin 89/03**

(45) Publication of the grant of the patent:
**20.05.92 Bulletin 92/21**

(84) Designated Contracting States:
**DE FR GB**

(56) References cited:
**WO-A-86/02938**

**CHEMICAL ABSTRACTS, vol. 109, no. 2, 11th July 1988, page 618, no. 15600p, Columbus, Ohio, US; H.TANIGUCHI et al.: "Electrical and optical properties of fluorinated ferroelectric liquid crystal" & JPN. J. APPL. PHYS., PART 1 1987, 26(Suppl. 26-2), 101-3**

(73) Proprietor: **MITSUBISHI RAYON CO., LTD.**
**3-19, Kyobashi 2-chome Chuo-Ku**
**Tokyo 104(JP)**

(72) Inventor: **Nakauchi, Jun**
**17-15-203, Kyodo 5-chome Setagaya-ku**
**Tokyo(JP)**
Inventor: **Sakashita, Keiichi**
**2-25-1, Tanaka-cho 3-chome**
**Akishima-shi Tokyo(JP)**
Inventor: **Hayashi, Seiji**
**Okagami-jutaku 2-309 71-2, Okagami Asao-ku**
**Kawasaki-shi Kanagawa(JP)**
Inventor: **Kageyama, Yoshitaka**
**San Coporasu 203 3-7-14, Kamisoshigaya**
**Setagaya-ku**
**Tokyo(JP)**
Inventor: **Mori, Kenji**
**20-6, Mukogaoka 1-chome Bunkyo-ku**
**Tokyo(JP)**

(74) Representative: **Stuart, Ian Alexander et al**
**MEWBURN ELLIS & CO. 2/3 Cursitor Street**
**London EC4A 1BO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 299 789 B1

**CHEMICAL ABSTRACTS, vol. 108, no. 2, 11th January 1988, page 583, no. 14754j, Columbus, Ohio, US; M.OZAKI et al.: "Effect of the molecular structure of the chiral part on spontaneous polarization and dielectric properties of ferroelectric liquid crystals" & JPN. J. APPL. PHYS., PART 2 1987, 26(9), L1558-L1560**

## Description

The present invention relates to a novel mesomorphic compound having an alkyl β-hydroxycarboxylate as the chiral group, which may be valuable as a ferroelectric liquid crystal or as an additive to a ferroelectric liquid crystal or to a compound showing the Sm*C phase and having no chiral group, and relates to a liquid crystal composition containing this mesomorphic compound.

Liquid crystals now used widely as display materials belong to the nematic phase and are of the light-receiving type, and therefore, are characterized in that they do not cause eye fatigue and have a low power consumption. These liquid crystals, however, have problems in that the response is slow and the display sometimes cannot be seen from a certain angle.

Display devices or printer heads comprising a ferroelectric crystal having these characteristics of the nematic liquid crystals and having a high-speed response and a high contrast comparable to those of a light-transmitting type display element have been investigated.

The ferroelectric liquid crystal was discoverted for the first time by R.B. Meyer et al in 1975 [J. Physique, 36, L-69 (1975)]. This ferroelectric liquid crystal belongs to the chiral smectic C phase (hereinafter referred to as "Sm*C phase" for brevity), and a typical compound of this ferroelectric liquid crystal is p-decyloxybenzylidene-p′-amino-2-methylbutyl cinnamate (hereinafter referred to as "DOBAMBC" for brevity) represented by the following formula (2):

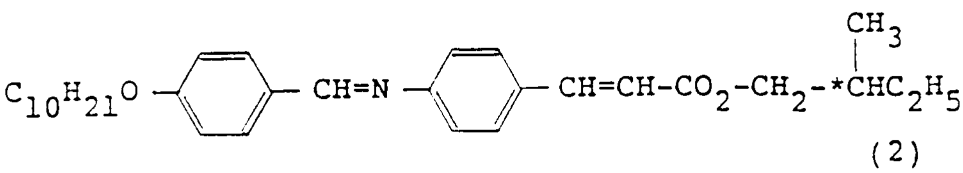

(2)

DOBAMBC and most of the ferroelectric liquid crystal materials proposed later have a problem in that the range of temperatures wherein the ferroelectric property is manifested (i.e., the range of temperatures wherein the Sm*C phase is present) is narrow, and they are difficult to use alone. Accordingly, in general, trials are carried out to expand the range of temperatures showing the Sm*C phase to the low temperature side and high temperature side, with room temperature as the center, by mixing a variety of ferroelectric crystals. For this purpose, ferroelectric liquid crystals having the Sm*C phase in the practical temperature range are necessary and to make room temperature to be included in the above-mentioned temperature range, a liquid crystal composition showing a ferroelectric property at temperature close to room temperature is necessary. Moreover, a ferroelectric liquid crystal having a much larger spontaneous polarization than in heretofore developed ferroelectric liquid crystals is desired for printer heads for which a super-high response is required.

WO 86/02938 discloses materials that have Sm*C phases and are derivatives of α-hydroxycarboxylic acids, including the structural unit $-COO-CHR_a-CO(O)_b-$ where $R_a$ is alkyl or phenyl, and b is 0 or 1, preferably 1 so that the chiral centre is flanked by ester groups which restrain rotation. The document teaches that this leads to high Ps values.

It is known that, among guest-host type displays having a dichromatic dye added thereto, those which have a tilt angle ox 45° give a highest contrast, but in most of heretofore developed ferroelectric liquid crystals, the tilt angle is about 20° and a good contrast cannot be obtained.

It is desirable to provide a compound which is chemically stable, does not undergo undesirable coloration, has an excellent photostability, shows a large spontaneous polarization, has a large tilt angle, shows ferroelectric property at low temperatures and is valuable as a ferroelectric liquid crystal or as an additive to a ferroelectric liquid crystal or to a compound showing the Sm*C phase and having no chiral group, and to provide a liquid crystal composition having these characteristics which can be used even for guest-host type displays.

In accordance with one fundamental aspect of the present invention, there is provided a mesomorphic compound having an alkyl β-hydroxycarboxylate as the asymmetric source, which is represented by the following general formula:

$$C_mH_{2m=1}O-R_1-X-R_2\overset{O}{\overset{\|}{C}}O\overset{*}{}\overset{R}{\overset{|}{C}}HCH_2\overset{O}{\overset{\|}{C}}OC_nH_{2n+1} \qquad (1)$$

wherein m is an integer of from 1 to 19, $R_1$ and $R_2$ stand for a phenylene group or a biphenylene group, X stands for $-OCH_2$-or $-CH_2O$-, R stands for a methyl group or an ethyl group, n is an integer of from 2 to 12, and * indicates the asymmetric carbon.

In accordance with another aspect of the present invention, there is provided a liquid crystal composition comprising at least one mesomorphoric compound having an alkyl β-hydroxycarboxylate as the chiral group, which is represented by the above formula (1).

BRIEF DESCRIPTION OF THE DRAWINGS

Figure 1 is the NMR spectrum of the compound obtained in Example 1;
Fig. 2 shows the temperature dependency of the spontaneous polarization in the Sm*C phase of the compound obtained in Example 1;
Fig. 3 is the NMR spectrum of the compound obtained in Example 3;
Fig. 4 shows the temperature dependency of the spontaneous polarization in the Sm*C phase of the compounds obtained in Examples 3 and 4;
Fig. 5 shows the temperature dependency of the tilt angle of the compound obtained in Example 3;
Fig. 6 shows the temperature dependency of the tilt angle of the compound obtained in Example 4;
Fig. 7 shows the temperature dependency of the tilt angle of the compounds obtained in Examples 5 and 6;
Fig. 8 shows the temperature dependency of the spontaneous polarization of the compounds obtained in Examples 5 and 6;
Fig. 9 shows the temperature dependency of the spontaneous polarization in the Sm*C phase of the compounds obtained in Examples 11, 12, 14, 15, and 16; and
Fig. 10 shows the temperature dependency of the tilt angle of the compound obtained in Examples 14, 15 and 16.

DESCRIPTION OF THE PREFERRED EMBODIMENTS

If the number of carbon atoms of the alkyl group $C_mH_{2m+1}$ in the formula (1) is 20 or larger or the number of carbon atoms of the alkyl group $C_nH_{2n+1}$ is 13 or larger, purification of an alkoxybenzoic acid chloride or an alkyl β-hydroxybutyrate used as the intermediate starting material is relatively difficult and the productivity is reduced, or the spontaneous polarization is often reduced when the compound is mixed with other liquid crystals. If the number of carbon atoms of the alkyl group $C_nH_{2n+1}$ is 1, the temperatures at which the ferroelectric crystal shows the Sm*C phase become undesirably high. From the viewpoint of the mesomorphism of the compound or the performance thereof as the liquid crystal additive, preferably m is from 3 to 18 and n is 3 to 10.

The compound represented by the general formula (1) can be synthesized according to the following reaction sequences. Where the alkyl β-hydroxybutyrate, which is a starting material used in the present invention, is the R-compound, this starting material is obtained by culturing a strain capable of producing poly-β-hydroxybutyric acid (hereinafter referred to as "PHB"), such as a strain belonging to the genus Pseudomona, Alcaligenes or Azotobacter and subjecting the PHB obtained by extracting the cells to alcoholysis using an appropriate alcohol. The S-compound thereof is obtained by reduction of β-ketobutyric acid by a yeast. The process for the synthesis of the compound represented by the above general formula (1) will now be described.

(i) The compounds of the general formula (1) in which X is $-OCH_2-$ can be synthesized according to the following reaction sequence.

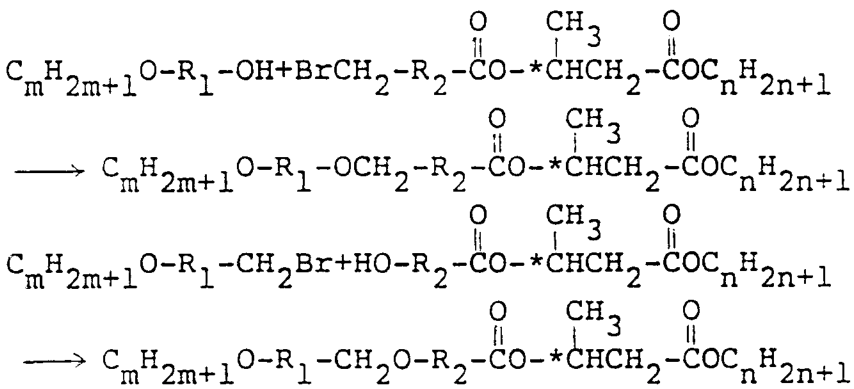

The bromomethyl compound or hydroxyl compounds used for the above reaction can be synthesized in the following manner.

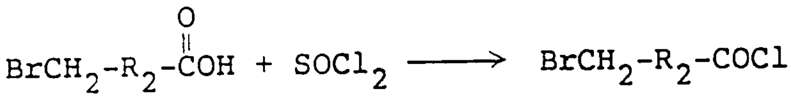

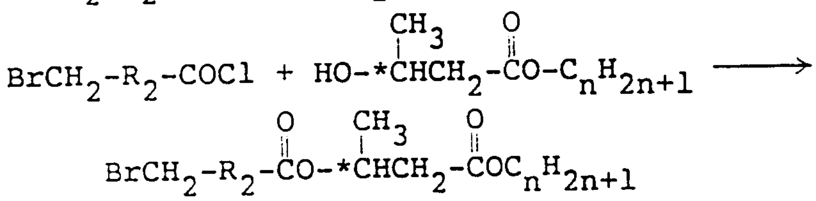

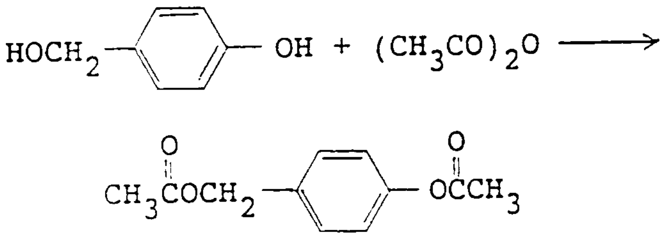

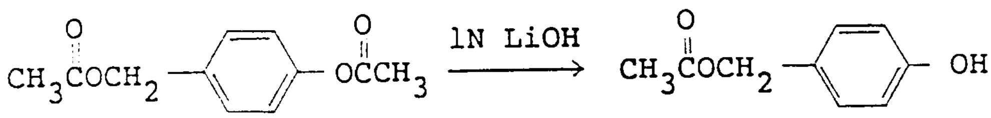


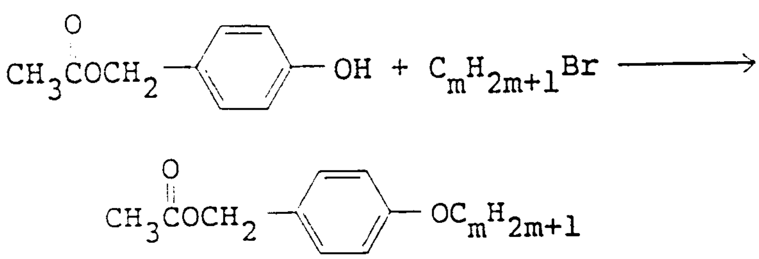

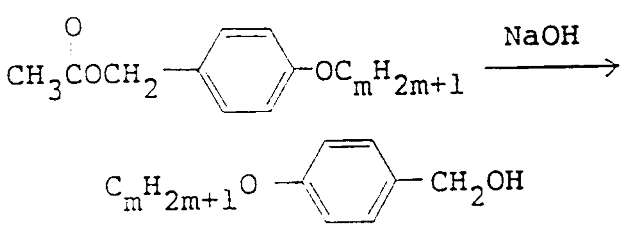


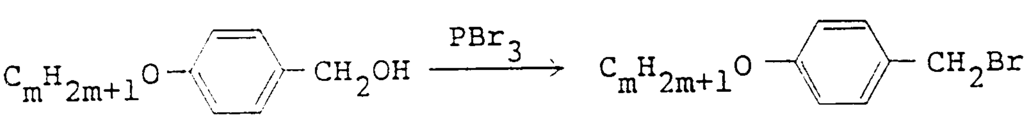


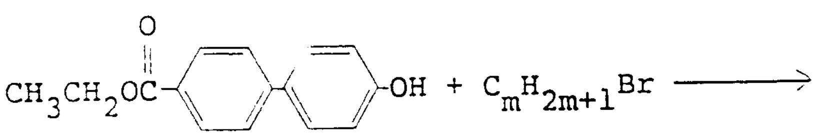

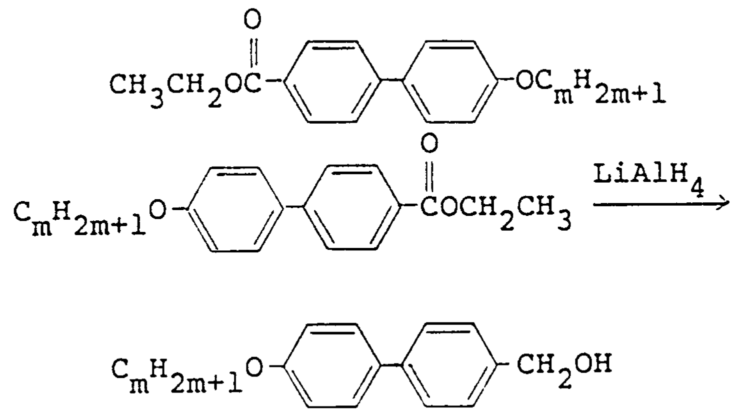
LiAlH4

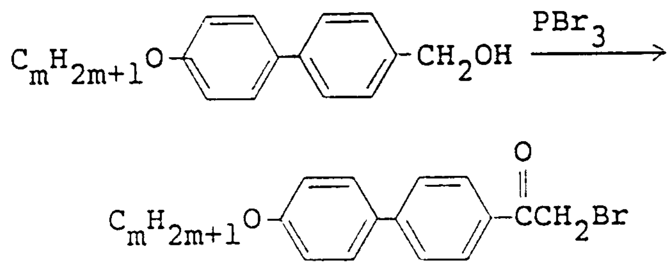
PBr3

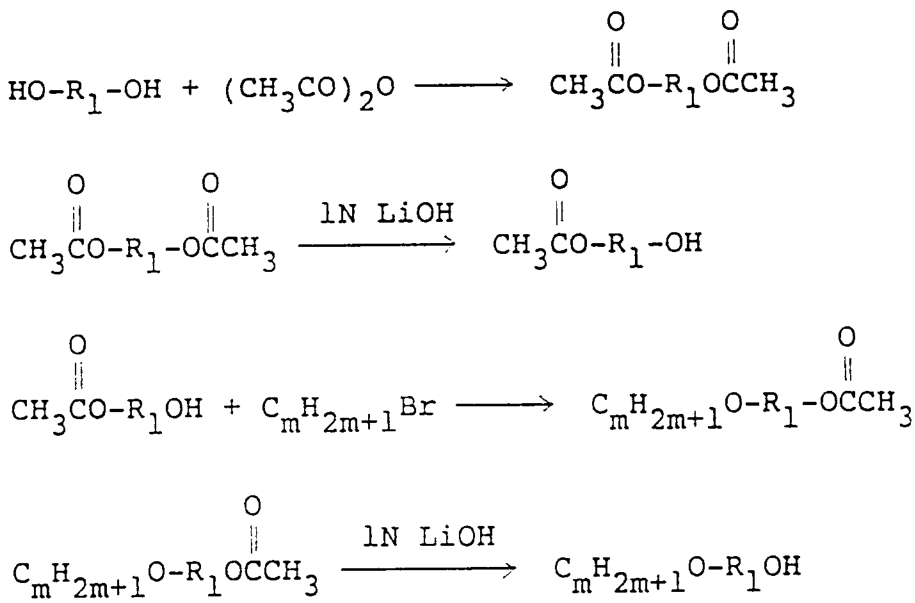
1N LiOH
1N LiOH

Synthesis may involve an ester of p-hydroxybenzoic acid or 4'-hydroxybiphenyl-4-carboxylic acid with alkyl 2-hydroxybutyrate. An ester of this type can be synthesised as follows:-

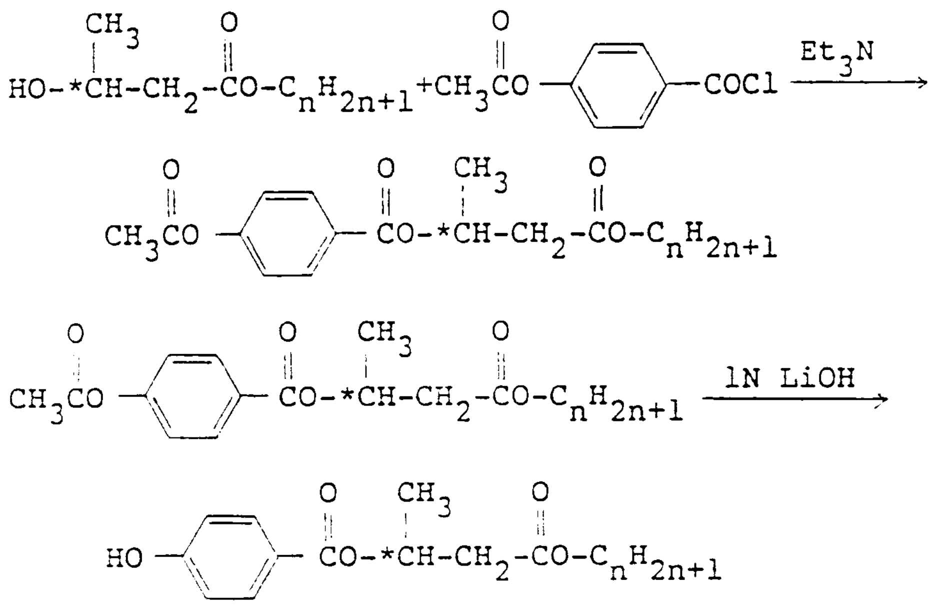


Almost all of the compounds of the present invention show the Sm*C phase in a relatively broad region of the practical temperature range, and have an excellent thermal stability. The spontaneous polarization is scores of nC and much higher than those of the conventional ferroelectric liquid crystal compounds, and the tilt angle is much larger than those of the conventional ferroelectric liquid crystal compounds. Compounds of the present invention not showing a ferroelectric property are characterized in that, when mixed with other ferroelectric liquid crystal compounds, the spontaneous polarization can be increased and the range of temperatures wherein the ferroelectric property is manifested can be expanded without a reduction of the ferroelectric property. Altenatively, compounds of the present invention not showing a ferroelectric property can be mixed with a compound showing the Sm*C phase and having no chiral group to provide a composition showing a chiral Sm*C phase. Moreover, since an azomethine bond is not contained in the structure, the compounds of the present invention have an excellent chemical stability such as a resistance to hydrolysis and do not undergo coloration, and since a vinyl group as observed in cinnamic acid type compounds is not contained in the compounds of the present invention, the photostability is excellent. Accordingly, the compounds of the present invention possess excellent characteristics required for display materials.

The liquid crystal composition of the present invention will now be described.

The liquid crystal composition of the present invention comprises at least one compound represented by the general formula (1). Compared with a liquid crystal composition comprising a single liquid crystal compound, a liquid crystal composition comprising a plurality of liquid crystal compounds or further containing an additive compound is advantageous in that the application temperature range can be widened. Moreover, since a compound having a large tilt angle is contained, the tilt angle can be adjusted to a desired level, and the composition can be used for a guest-host type display. As typical examples of other ferroelectric liquid crystals that can be mixed with at least one compound represented by the general formula (1), there can be mentioned the following compounds.

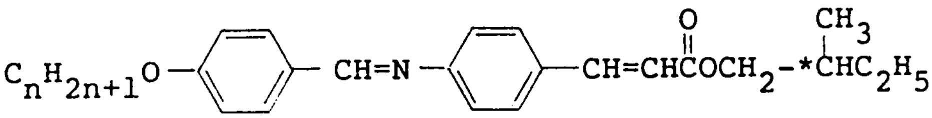

(n = integer of 6 to 16)

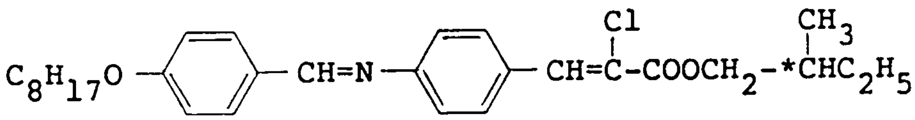
,

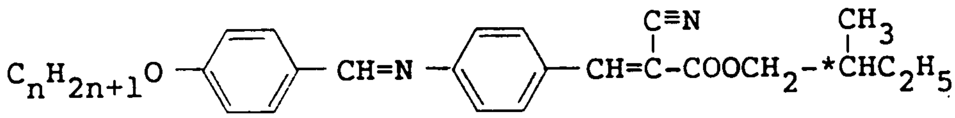
,

(n = integer of 8 or 10)

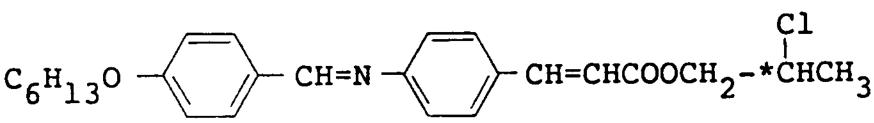
,

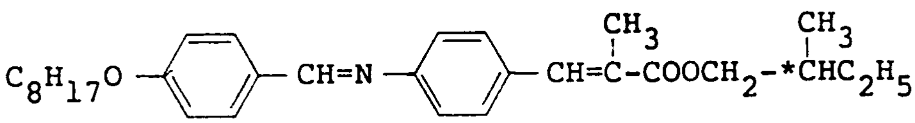
,

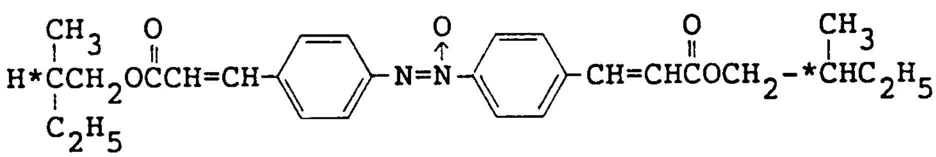
,

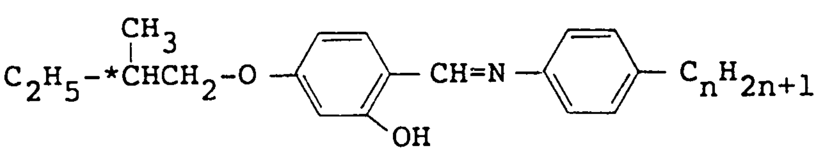
,

(n = integer of 7 to 10)

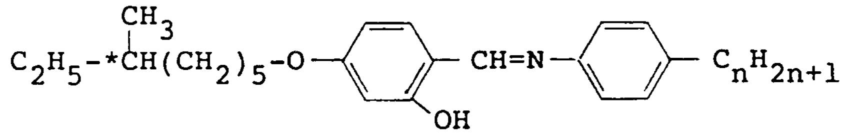 ,

(n = integer of 7 to 14)

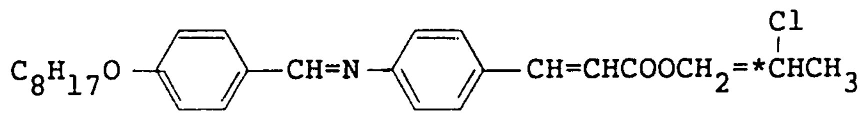 ,

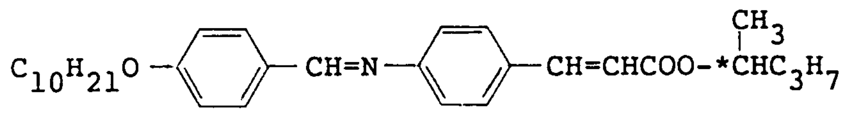 ,

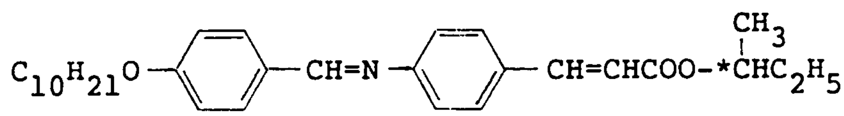 ,

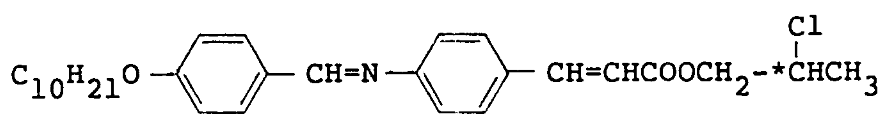 ,

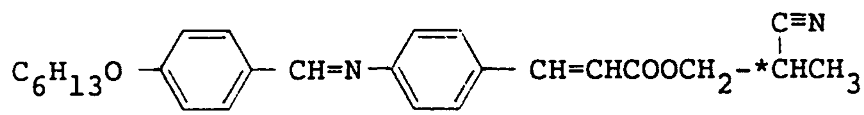 ,

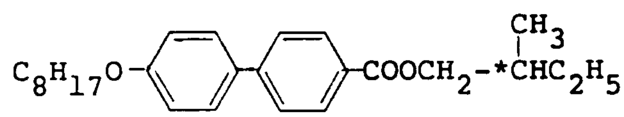 ,

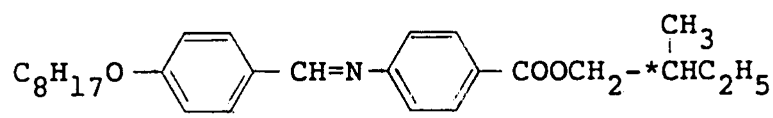 ,

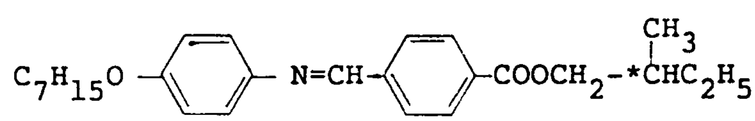 ,

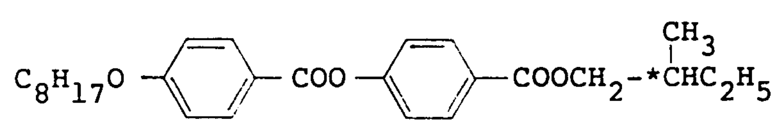 ,

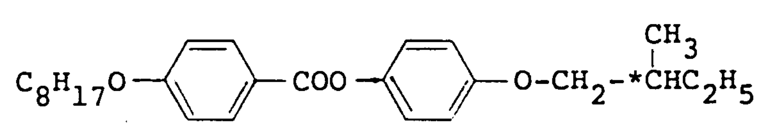 ,

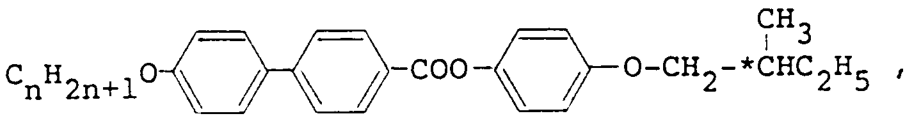 ,

(n = integer of 6 to 14)

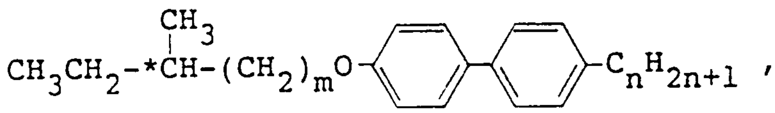 ,

(m = integer of 2 to 5, n = integer of 8 to 12)

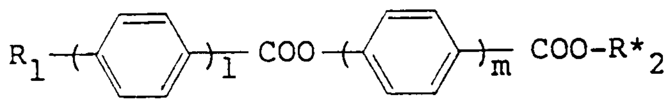

(l and m = integer of 1 to 2, $R_1$ = $C_nH_{2n+1}O-$ or $C_nH_{2n+1}-$ (n = integer of 8 to 10),

$R^*_2$ = 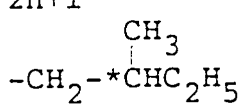 or 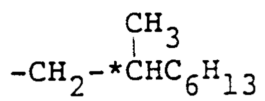),

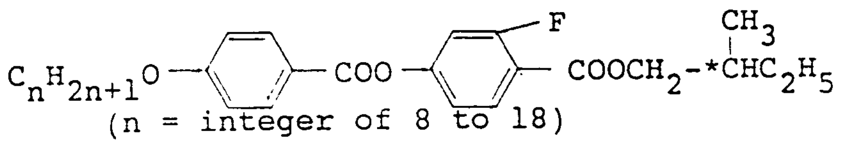 , and

(n = integer of 8 to 18)

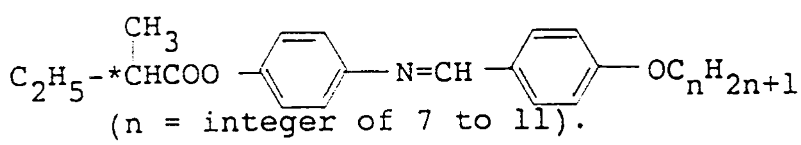 ,

(n = integer of 7 to 11).

Any other compound having the SmC phase can be mixed with the compound represented by the general formula (1), and moreover, two or more of the foregoing compounds can be incorporated.

The present invention will now be described in detail with reference to the following examples. Some of the syntheses lead to compounds outside the present invention but disclose methods and/or intermediates that may be useful in connection with the present invention.

Referential Example 1

Synthesis of alkyl 2R-hydroxybutyrates

In a mixed solvent of 72 ml of ethanol and 72 ml of 1,2-dichloroethane was suspended 10 g of PHB obtained by culturing Azotobacter vinelandi (IFO 1358) and extracting the cells, 22 ml of concentrated sulfuric acid was added to the suspension, and the reaction was carried out under reflux for 40 hours. The insoluble substances were removed by filtration, and the filtrate was neutralized with a saturated aqueous solution of sodium hydrogencarbonate and extracted two times with diethyl ether. The ether layer was washed with a saturated aqueous solution of sodium chloride and dehydrated on sodium sulfate overnight. Then, the diethyl ether was removed by distillation using a rotary evaporator and the residue was subjected to distillation under a reduced pressure to obtain 8 g of ethyl 2R-hydroxybutyrate. The specific rotation $[\alpha]_D^{23}$ of the compound was -44.7° (C = 1.36, $CDCl_3$), and the yield was 52%.

Esters having different alkyl chain lengths were similarly synthesized by using alcohols having a predetermined carbon number, instead of ethanol.

Referential Example 2

Synthesis of 4′-acetoxybiphenyl-4-carboxylic acid chloride

In 1.5 ℓ of a 1.5N aqueous solution of sodium hydroxide was dissolved 170 g (1.0 mole) of p-hydroxybiphenyl, 254 g (1.8 moles) of dimethyl sulfate was dropped into the solution while maintaining the liquid temperature at 55 °C, and the reaction was carried out at 70 °C for 30 minutes with stirring. The precipitate was recovered by filtration, washed with water, dried, and recrystallized from ethanol to obtain 4-methoxybiphenyl.

In a mixed solvent of 400 ml of carbon disulfide and 600 ml of benzene was dissolved 150 g of the 4-methoxybiphenyl and 125 g (0.94 mole) of aluminum chloride, which had been vacuum-dried, was added to the solution under ice cooling and then 95 g (1.21 moles) of acetyl chloride was added. The reaction was carried out under reflux for 1 hour, the reaction mixture was cooled, 480 ml of ice-cooled concentrated sulfuric acid was added to the reaction mixture, and carbon disulfide and benzene were removed by steam distillation. The precipitate was recovered by filtration, washed with water, washed with ether, dried under a reduced pressure, and recrystallized from isopropanol to obtain 60 g of 4-methoxy-4′ -acetoxybiphenyl. Then, 30 g of this 4-methoxy-4′-acetoxybiphenyl was dissolved in 400 ml of dioxane, and an aqueous solution comprising 84 g of sodium hydroxide, 400 ml of water, and 30 ml of bromine, which had been prepared in advance, was dropped into the solution while maintaining the liquid temperature at 40 °C. The mixture was stirred for 30 minutes, 20 g of sodium hydrogensulfate and 1 ℓ of water were added to the mixture, and the reaction liquid was concentrated under a reduced pressure. Methyl bromide and dioxane were evaporated and concentrated hydrochloric acid was added to the residue, and the mixture was naturally cooled. The precipitate was recovered by filtration, washed with water, and dried to obtain 30 g of 4′-methoxybiphenyl-4-carboxylic acid. Then, 30 g of this 4′-methoxyphenyl-4-carboxylic acid was dissolved in 1.2 ℓ of acetic acid, 240 ml of 48% hydrogen bromide was added to the solution, and the mixture was refluxed for 10 hours. Then, 3 ℓ of ice water was added to the reaction liquid, and the precipitate was recovered by filtration, washed with water, dried, and dissolved in a liquid mixture of 50 ml of acetic anhydride and 25 ml of pyridine. The solution was allowed to stand overnight and dropped into 200 ml of ice water, and the precipitate was recovered by filtration, washed with water, dried, and recrystallized from acetic acid to obtain 18 g of 4′-acetoxybiphenyl-4-carboxylic acid. Then, 100 g of thionyl chloride was dropped into 18 g of this 4′-acetoxyphenyl-4-carboxylic acid and the reaction was carried out under reflux for 2 hours. The unreacted thionyl chloride was removed by distillation to obtain 20 g of 4′-acetoxybiphenyl-4-carboxylic acid chloride.

Referential Example 3

Synthesis of ethyl 2R-[4′-(4″-hydroxy)biphenyl]oxycarbonylbutyrate

In a solution comprising 45 ml of pyridine and 4.5 ml of triethylamine were dissolved with stirring 1.5 g of ethyl 2R-hydroxybutyrate synthesized in Referential Example 1 and 3.2 g of 4′-acetoxybiphenyl-4-carboxylic acid chloride obtained in Referential Example 2, the solution was allowed to stand at room temperature overnight, and then thrown into ice water. The formed precipitate was recovered by filtration, chloroform was added to the precipitate, and extraction with dilute hydrochloric acid, water, and then with a saturated aqueous solution of sodium chloride, was repeated. The chloroform layer was dehydrated on magnesium sulfate.

Chloroform was removed by distillation using an evaporator and the residue was dissolved in 30 ml of a mixed solvent comprising tetrahydrofuran and methanol at a volume ratio of 9/1, and 12 ml of a 1N aqueous solution of lithium hydroxide was added to the solution. The reaction was carried out at room temperature with stirring for 2 hours, chloroform was again added to the reaction mixture, and the reaction mixture was extracted with water and then with a saturated aqueous solution of sodium chloride. The extract was dehydrated on magnesium sulfate overnight. Then, chloroform was removed by distillation using an evaporator to obtain 3.1 g of ethyl 2R-[4′-(4″-hydroxy)biphenyl]oxycarbonylbutyrate. Other alkyl esters of 2R[4′-(4″-hydroxy)biphenyl]oxycarbonylbutyric acid were similarly synthesized.

Referential Example 4

Synthesis of p-decyloxybenzyl alcohol

In 50 ml of dry tetrahydrofuran was dissolved 2.92 g (0.01 mole) of methyl p-decyloxybenzoate, and 0.8 g (0.02 mole) of lithium aluminum hydride (LAH) was dropped into the solution under ice cooling. After completion of the dropwise addition, the reaction mixture was stirred at room temperature for 2 hours. Water was added to the reaction mixture to decompose excessive LAH. The precipitate was recovered by filtration, dried and extracted with ethanol to obtain crude p-decyloxybenzyl alcohol substantially quantitatively.

p-Alkoxybenzyl alcohols having different alkoxy chain lengths were similarly synthesized.

Referential Example 5

Synthesis of methyl p-bromomethylbenzoate

In 50 ml of absolute methanol was dissolved 2.15 g (0.01 mole) of p-bromomethylbenzoic acid, 1.2 g (0.01 mole) of thionyl chloride was added to the solution, and the reaction was carried out at room temperature with stirring overnight. The unreacted methanol was removed by distillation to obtain crude methyl p-bromomethylbenzoate substantially quantitatively.

Referential Example 6

Synthesis of 4-decyloxy-4′-hydroxybiphenyl

In 200 ml of ethanol were dissolved 1.86 g (0.01 mole) of p,p′-biphenol and 2.21 g (0.01 mole) of decyl bromide, and 1 ml of a 10N aqueous solution of KOH was added dropwise over a period of about 1 hour. After completion of the dropwise addition, the reaction was carried out under reflux for 2 hours, the reaction mixture was cooled, and the precipitated crystal was recovered by filtration. The product obtained by filtration was recrystallized from a mixed solvent of n-hexane and chloroform to obtain 2.5 g of the intended product. The yield was 78%.

4-Alkoxy-4′-hydroxybiphenyls having different alkoxy chain lengths were similarly synthesized by using alkyl bromides having predetermined alkyl chain lengths instead of decyl bromide.

Referential Example 7

Synthesis of methyl p-(4″-decyloxy-4′-biphenyloxymethylbenzoate

In a nitrogen current, 0.3 g of oily sodium hydride (the sodium hydride content was 60%) was washed with n-pentane to prepare 0.24 g of dry sodium hydride. Then, 20 ml of dry dimethylformamide (DMF) was added to this sodium hydride to form a suspension. Separately, 3.2 g (0.01 mole) of 4-decyloxy-4′-hydroxybiphenyl synthesized in Referential Example 6 was dissolved in 20 ml of DMF. The solution was gradually dropped into the suspension under ice cooling, and after completion of the dropwise addition, the temperature of the reaction liquid was elevated to room temperature and the reaction liquid was further stirred for 2 hours. Then, a solution of 2.35 g (0.01 mole) of methyl p-bromomethylbenzoate synthesized in Referential Example 5 in 20 ml of DMF was added dropwise to the reaction liquid. The reaction was carried out with stirring overnight, and distilled water was added to the reaction mixture. The precipitated product was recovered by filtration and dried to obtain 4.0 g of a crude product. The yield was 83%.

Other esters having different alkoxy chain lengths were similarly synthesized by using 4-alkoxy-4′-hydroxybiphenyls having predetermined alkoxy chain lengths instead of decyloxy-4′-hydroxybiphenyl.

Referential Example 8

Synthesis of p-(4″-decyloxy-4′-biphenyloxymethyl)benzoic acid chloride

In 50 ml of a solution of 0.3 g of KOH in a water/ethylene mixed solvent (1/10) was dissolved 2.4 g (0.005 mole) of methyl p-(4″-decyloxy-4′-biphenyloxymethyl)benzoate synthesized in Referential Example 7, and the reaction was carried under reflux for 4 hours. The reaction liquid was thrown in dilute hydrochloric acid and the precipitated product was recovered by filtration, washed, and dried.

Excessive thionyl chloride was added to the dried product and the mixture was refluxed for 2 hours, and the unreacted thionyl chloride was removed to obtain p-(4″-decyloxy-4′-biphenyloxymethyl)benzoic acid chloride substantially quantitatively.

Other p-(4′-alkoxy-4′-biphenyloxymethyl)benzoic acid chlorides having different alkoxy chain lengths were similarly synthesized by using corresponding methyl esters having predetermined alkoxy chain lengths.

Referential Example 9

Synthesis of propyl 2R-(4-hydroxybenzoyloxy)butyrate

Propyl 2R-(4-hydroxybenzoyloxy)butyrate was synthesized in the same manner as described in Referential Example 3 except that 2.3 g of p-acetoxybenzoic acid chloride was used instead of 3.2 g of 4′-acetoxybiphenyl-4-carboxylic acid chloride and 1.6 g of propyl 2R-hydroxybutyrate was used instead of 1.5 g of ethyl 2R-hydroxybutyrate. The amount of the obtained propyl ester was 2.16 g.

Other alkyl esters of 2R-(4-hydroxybenzoyloxy)butyric acid having different alkyl chain lengths were similarly synthesized.

Referential Example 10

Synthesis of 4′-decyloxybiphenyl-4-carboxylic acid chloride

In 30 ml of methyl isobutyl ketone were incorporated 3 g of 4-hydroxy-4′-cyanobiphenyl, 21.4 g of 1-bromododecane and 2.5 g of potassium carbonate, and the mixture was refluxed for 30 hours to effect a reaction. The reaction mixture was cooled, the insoluble substances were removed by filtration, the filtrate was concentrated under a reduced pressure, and ethanol was added to the residue to effect recrystallization and obtain 5 g of 4-decyloxy-4′-cyanobiphenyl. In 25 ml of ethanol was dissolved 4.1 g of this 4-decyloxy-4′-cyanobiphenyl, 2.5 ml of a 2N aqueous solution of sodium hydroxide was added to the solution, and the reaction was carried out under reflux for 2 hours. After the reaction, the reaction mixture was cooled, the precipitate was recovered by filtration, washed with dilute hydrochloric acid, water, and then with ethanol, and dried to obtain 4.3 g of 4′-decyloxybiphenyl-4-carboxylic acid. Then, 20 g of thionyl chloride was added dropwise to this carboxylic acid and refluxed for 2 hours. The unreacted thionyl chloride was removed by distillation under a reduced pressure to obtain 4.5 g of 4′-decyloxybiphenyl-4-carboxylic acid chloride.

2R-(4-Alkoxybiphenyl)-4-carboxylic acid chlorides having different alkyl chain lengths were similarly synthesized.

In the following examples, the compounds produced were confirmed by the NMR spectrum and elementary analysis.

The phase transition temperature of the compounds obtained in the following examples were measured using differential scanning calorimeter (DSC) and an identification of the mesophase was carried out by a polarizing microscope. The results are shown in the figures in the examples. In these figures, "Cryst." indicates a crystal "Sm*C" indicates a chiral smectic C phase, "SmA" indicates a smectic A phase, "Sm?" indicates an unidentified smectic phase, and "Iso" indicates an isotropic phase. Each arrow in the figures indicates the transition to a corresponding phase, and the temperature shown in the vicinity of the arrow is the temperature of the transition to the corresponding phase.

Example 1

In 50 ml of dry tetrahydrofuran were dissolved 2.6 g (0.01 mole) of p-decyloxybenzyl alcohol synthesized in Referential Example 4 and 2.75 g of triphenylphosphine, and 3.4 g (0.01 mole) of propyl D-β-(4″-hydroxy-4′-biphenylcarboxy)butyrate synthesized according to the process of Referential Example 3

was added to the solution. Then, 2.61 g (0.015 mole) of ethyl azodicarboxylate was dropped into the mixture at room temperature with stirring and the reaction was carried out for 30 minutes. After the reaction, the reaction liquid was dried and solidified under a reduced pressure, and the intended product (in the formula (1), $R_1$ is a phenylene group, x is $-CH_2O-$, $R_2$ is a biphenylene group, m is 10, n is 3 and R is a methyl group) was isolated and purified by the silica gel chromatography. Recrystallization from ethanol gave 1.5 g of the product.

The NMR spectrum of the compound obtained is shown in Fig. 1, and the elementary analysis values are as follows.

Elementary analysis values

| | |
|---|---|
| Found values: | C = 75.21%, H = 8.40% |
| Theoretical values: | C = 75.48%, H = 8.22% |

The phase transition temperatures of this compound are as follows:

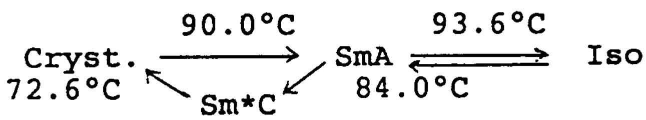


The temperature dependency of the spontaneous polarization in the Sm*C phase of this compound, determined under conditions of a cell thickness of 50 μm, a frequency of 10 Hz and a peak voltage of ±150 V according to the triangular wave method, is shown in Fig. 2.

## Example 2

A mesomorphic compound was obtained in the same manner as described in Example 1 except that, instead of propyl D-β-(4″-hydroxy-4′-biphenylcarboxy)butyrate, the same molar amount of ethyl D-β-(4″-hydroxy-4′-biphenylcarboxy)butyrate was used. The transition temperature of the obtained compound are as follows:

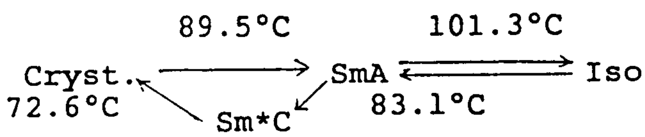


## Example 3

In 50 ml of dry toluene were suspended 1.33 g (0.01 mole) of ethyl 2R-hydroxybutyrate synthesized according to the process of Referential Example 1 and 5.0 g (0.01 mole) of p-(4″-dodecyloxy-4′-biphenyloxymethyl)benzoic acid chloride synthesized according to a process similar to that of Referential Example 8. 10 ml of pyridine was added to the suspension, and the reaction was carried out under reflux for 4 hours. Then, the reaction mixture was cooled and chloroform was added thereto to effect extraction. The chloroform layer was washed with dilute hydrochloric acid and then with distilled water and was dehydrated by addition of magnesium sulfate. Chloroform was evaporated and the residue was separated and purified in a silica gel column to isolate the intended product. Recrystallization from ethanol gave 1.6 g of the intended product.

The product obtained was the intended compound wherein, in the formula (1), $R_1$ is a biphenylene group, X is $-OCH_2-$, $R_2$ is a phenylene group, m is 12, n is 2 and R is a methyl group.

The NMR spectrum of this compound is shown in Fig. 3, and the elementary analysis values of the compound are as follows:

Elementary analysis values

| | |
|---|---|
| Found values: | C = 75.62%, H = 8.43% |
| Theoretical values: | C = 75.72%, H = 8.36% |

The phase transition temperatures of this compound are as follows:

$$\text{Cryst.} \underset{87.7^\circ C}{\overset{98.2^\circ C}{\rightleftarrows}} \text{Sm?} \underset{112.0^\circ C}{\overset{112.4^\circ C}{\rightleftarrows}} \text{Sm*C} \underset{129^\circ C}{\overset{129^\circ C}{\rightleftarrows}} \text{Iso}$$

The temperature dependency of the spontaneous polarization in the Sm*C phase and Sm? phase of the compound measured under conditions of a cell thickness of 50 µm, a frequency of 10 Hz and a peak voltage of ±150 V according to the triangular wave method is shown in Fig. 4 (curve A), and the temperature dependency of the tilt angle measured under application of a voltage by a polarizing microscope is shown in Fig. 5.

Example 4

A mesomorphic compound was obtained in the same manner as described in Example 3 except that instead of ethyl 2R-hydroxybutyrate, the same molar amount of propyl 2R-hydroxybutyrate was used and instead of p-(4″-dodecyloxy-4′-biphenyloxymethyl)benzoic acid chloride, the same molar amount of p-(4″-decyloxy-4′-biphenyloxymethyl)benzoic acid chloride was used.

The transition temperatures of the compound are shown below, and the temperature dependencies of the spontaneous polarization and tilt angle determined in the same manner as described in Example 3 are shown in Fig. 4 (curve B) and Fig. 6, respectively.

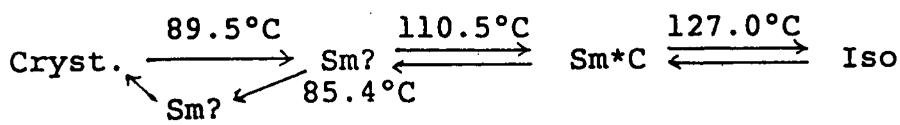


Example 5

In a mixed solvent comprising 10 ml of pyridine and 1 ml of triethylamine were dissolved 0.6 g of propyl 2R-[4′-(4″-hydroxy)biphenyl]oxycarbonylbutyrate synthesized according to the process described in Referential Example 3 and 0.56 g of 4-n-decyloxybenzoic acid chloride, and the solution was stirred at room temperature overnight. The reaction liquid was put into ice water and the precipitate was recovered by filtration. The recovered precipitate was dissolved in chloroform and extracted with dilute hydrochloric acid, water and then with a saturated aqueous solution of sodium chloride. The chloroform layer was dehydrated on magnesium sulfate overnight and chloroform was removed by distillation using an evaporator. The residue was passed through a silica gel column by using benzene as the developing solvent to isolate the intended compound, and the intended compound was recrystalized from ethanol. The product obtained was propyl 2R-[4-(4′-(4″-n-decyloxy)benzyloxy)biphenyl]oxycarbonylbutyrate. The elementary analysis values of the compound and the phase transition temperatures thereof are shown below, the temperature dependency of the spontaneous polarization in the Sm*C phase of the compound, determined under conditions of a cell thickness of 50 µm, a frequency of 10 Hz and a peak voltage of ±150 V according to the triangular wave method, is shown in Fig. 8 (curve A), and the temperature dependency of the tilt angle is shown in Fig. 7 (curve A).

Elementary analysis values

| | |
|---|---|
| Found values: | C = 73.66%, H = 7.72% |
| Theoretical values: | C = 73.73%, H = 7.69% |

Phase transition temperatures

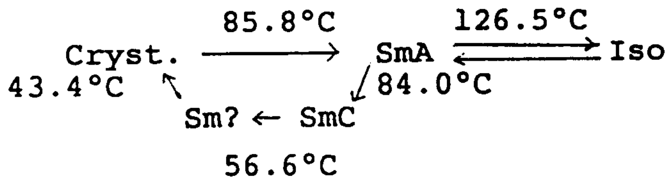


Examples 6 through 10

Alkyl 2R-[4-(4′-(4″-n-alkoxy)benzoyloxy)biphenyl]oxycarbonylbutyrates were synthesized in the same manner as described in Example 3 except that predetermined amounts of alkyl 2R-[4′-(4″-hydroxy)-biphenyl]oxycarbonylbutyrates and 4-n-alkoxy benzoic acid chlorides shown in Table 1 were used instead of 0.6 g of propyl 2R-[4′-(4″-hydroxy)biphenyl]oxycarbonylbutyrate and 0.56 g of 4-n-decyloxybenzoic acid chloride.

The phase transition temperatures of these compounds are shown in Table 1. The temperature dependency of the spontaneous polarization of the compound obtained in Example 6, determined according to the method described in Example 5, is shown in Fig. 8 (curve B), and the temperature dependency of the tilt angle is shown in Fig. 7 (curve B).

Table 1

| Example No. | Alkyl 2R-[(4-(4'-hydroxybiphenyl)]oxycarbonylbutyrate: Carbon number in alkyl group | Alkyl 2R-[(4-(4'-hydroxybiphenyl)]oxycarbonylbutyrate: Amount charged (g) | 4-n-Alkoxybenzoic acid chloride: Carbon number in alkyl group | 4-n-Alkoxybenzoic acid chloride: Amount charged (g) | Yield (g) | Phase transition temperature (°C) |
|---|---|---|---|---|---|---|
| 6 | 3 | 0.60 | 16 | 0.76 | 0.65 | 69.8°C 105°C 112°C<br>Cryst. → Sm*C ⇄ SmA ⇄ Iso<br>49.3°C 59°C<br>Sm? |
| 7 | 8 | 1.00 | 7 | 0.70 | 1.2 | 66°C 104.5°C<br>Cryst. ⇄ SmA ⇄ Iso<br>12.4°C |
| 8 | 8 | 1.00 | 10 | 0.82 | 1.4 | 54.4°C 74.1°C 116.5°C<br>Cryst. ⇄ Sm? ⇄ SmA ⇄ Iso<br>23°C 48.5°C |
| 9 | 3 | 1.00 | 7 | 1.00 | 0.7 | 68.7°C 127.6°C<br>Cryst. → SmA ⇄ Iso<br>30.7°C 57.8°C<br>Sm? ← Sm*C |
| 10 | 4 | 1.00 | 10 | 1.00 | 0.8 | 63.9°C 65.5°C 124.0°C<br>Cryst. → Sm*C ⇄ SmA ⇄ Iso<br>Sm? 53.9°C |

Example 11

Propyl 2R-[4-(4′-(4″-decyloxy)biphenyl)oxycarbonylbenzoyloxy] butyrate were synthesized in the same manner as described in Example 5 except that 0.53 g of propyl 2R-(4-hydroxybenzoyloxy)butyrate obtained in Referential Example 9 and 0.67 g of 4′-decyloxybiphenyl-4-carboxylic acid chloride obtained in Referential Example 10 were used instead of 0.6 g of propyl 2R-[4′-(4″-hydroxy)biphenyl]oxycarbonylbutyrate and 0.56 g of 4-n-decyloxybenzoic acid chloride, respectively. The yield was 0.45 g.

The elementary analysis values and phase transition temperatures of the compound obtained are shown below.

Elementary analysis values

| | |
|---|---|
| Found values: | C = 74.01%, H = 7.82% |
| Theoretical values: | C = 73.73%, H = 7.69% |

Phase transition temperatures

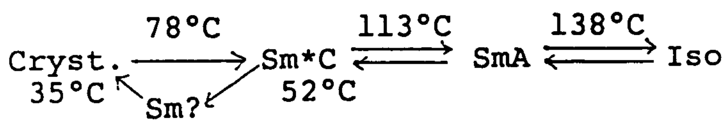


The temperature dependency of the spontaneous polarization in the Sm*C phase of the compound, determined according to the method described in Example 1, is shown in Fig. 9, curve A.

Examples 12 through 16

Alkyl 2R-[4-(4′(4″-n-alkoxy)biphenyl)oxycarbonylbenzoyloxy]butyrates were synthesized in the same manner as described in Example 1 except that predetermined amounts of alkyl 2R-(4-hydroxybenzoyloxy) butyrates and 4′-n-alkoxybiphenyl-4-carboxylic acid chlorides shown in Table 2 were used instead of 1.0 g of ethyl 2R-[4′-(4″-hydroxy)-biphenyl]oxycarbonylbutyrate and 0.88 g of 4-n-heptyloxy-benzoic acid chloride, respectively.

The phase transition temperatures of these compounds measured according to the method of Example 1 are shown in Table 2. The temperature dependencies of the spontaneous polarization of the compounds showing the Sm*C phase are shown in Fig. 9. (curves B, C, D and E correspond to Examples 16, 14, 12 and 15, respectively).

The temperature dependency of the tilt angle of the compounds obtained in Examples 14 through 16 are shown in Fig. 10, curves A, B and C, respectively.

Table 2

| Example No. | Alkyl 2R-(4-hydroxybenzoyloxy), butyrate: Carbon number in alkyl group | Alkyl 2R-(4-hydroxybenzoyloxy), butyrate: Amount charged (g) | 4-n-Alkoxybiphenyl-4-carboxylic acid chloride: Carbon number in alkyl group | 4-n-Alkoxybiphenyl-4-carboxylic acid chloride: Amount charged (g) | Yield (g) | Phase transition temperature (°C) |
|---|---|---|---|---|---|---|
| 12 | 5 | 0.70 | 10 | 1.07 | 1.1 | Cryst. →(69.9°C) Sm*C ⇄(100°C) SmA ⇄(132.4°C) Iso; Sm*C →(50.2°C) Sm? →(26.5°C) Cryst. |
| 13 | 8 | 0.53 | 7 | 0.64 | 0.71 | Cryst. →(77.5°C) SmA ⇄(136°C) Iso; SmA →(58°C) Sm? →(49.3°C) Cryst. |
| 14 | 3 | 0.80 | 7 | 1.00 | 0.5 | Cryst. →(91.8°C) Sm*C ⇄(105°C) SmA ⇄(154.3°C) Iso; Sm*C →(74.9°C) Sm? → Cryst. |
| 15 | 8 | 1.00 | 10 | 1.00 | 0.8 | Cryst. ⇄(74.5°C) Sm*C ⇄(83.5°C) SmA ⇄(123.7°C) Iso |
| 16 | 3 | 0.70 | 16 | 1.00 | 0.5 | Cryst. →(87.2°C) Sm*C ⇄(108.2°C) SmA ⇄(126.9°C) Iso |

Example 17

In 50 cc of DMF were dissolved 10 g of 3S-hydroxy-valeric acid synthesized according to the process of K. Mori et al [Tetrahedron, 41, 919 (1985)] by using baker's yeast and 10 g of n-propyl bromide, 15 g of 1,8-diazabicyclo [5,4,0]-7-undecene was added to the solution, and the reaction was carried out at 80 ° C for 6 hours. After the reaction, the reaction liquid was diluted with ether and washed with dilute hydrochloric acid and then distilled water. The ether layer was dehydrated by addition of anhydrous magnesium sulfate and concentrated by an evaporator. The concentrate was subjected to distillation under a reduced pressure to obtain 9 g of the intended compound.

Then, 0.9 g of propyl (3S)-4-hydroxybenzoyloxy) valerate was synthesized from 1 g of the so-obtained propyl(3S)-hydroxy-valerate and 1 g of p-acetoxybenzoic acid chloride. 0.9 g of the so-obtained propyl(3S)-(4-hydroxybenzoyloxy)valerate was reacted with 1.0 g of 4′-decyloxybiphenyl-4-carboxylic acid chloride obtained according to the process of Referential Example 10 in the same manner as described in Example 7 to obtain a compound represented by the following chemical formula:

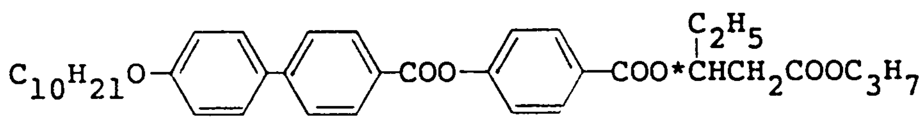

By NMR spectrum and infrared absorption spectrum, it was confirmed that the compound obtained was the intended product. The phase transition temperatures of the compound are shown below.

$$\text{Cryst.} \underset{38.0^{\circ}C}{\overset{62.0^{\circ}C}{\rightleftarrows}} \text{Sm*C} \overset{78.0^{\circ}C}{\rightleftarrows} \text{SmA} \overset{116.5^{\circ}C}{\rightleftarrows} \text{Iso}$$

Example 18

Liquid crystal compositions were prepared by mixing compounds shown in Table 3 at a ratio shown in Table 3. The phase transition temperatures are shown below. It was confirmed that the compositions showed a ferroelectric phase in a broad temperature range including room temperature and had practically excellent characteristics.

$$\text{Sm?} \underset{}{\overset{25°C}{\rightleftarrows}} \text{Sm*C} \underset{}{\overset{73°C}{\rightleftarrows}} \text{SmA} \underset{}{\overset{122°C}{\rightleftarrows}} \text{Iso}$$

Table 3

| | (mole%) |
|---|---|
| 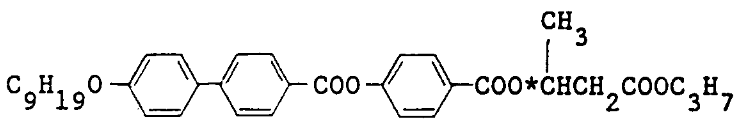 | 12 |
| 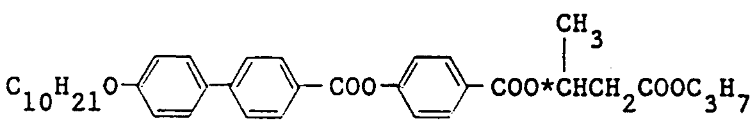 | 12 |
| 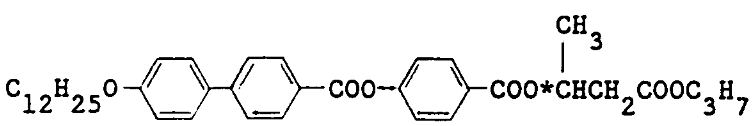 | 12 |
| 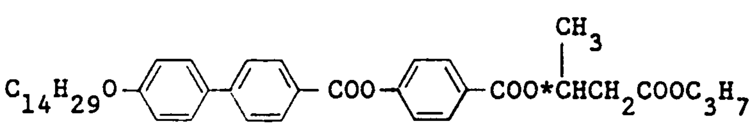 | 12 |
| 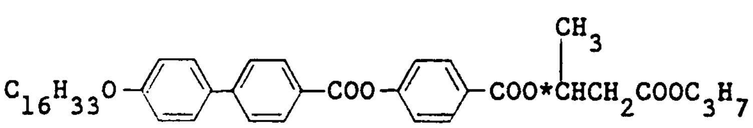 | 12 |
| 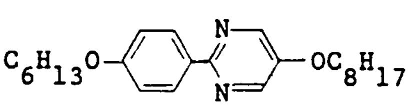 | 6.68 |
| 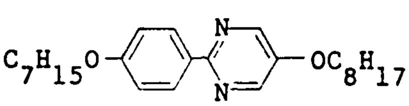 | 6.68 |
| 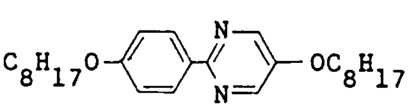 | 6.68 |

Table 3 (continued)

| | (mole%) |
|---|---|
| 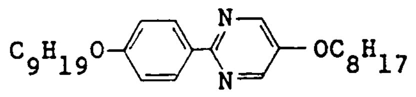 | 6.68 |
| 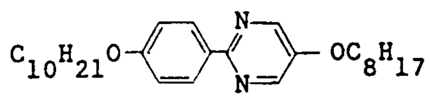 | 6.68 |
| 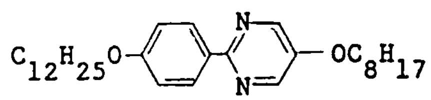 | 6.68 |

Almost all of the compounds of the present invention have a high spontaneous polarization as a ferroelectric liquid crystal, have a broad range of temperatures where the ferroelectric mesomorphism is maintained, have no coloration, have an excellent chemical stability such as a resistance to hydrolysis, and have a good photo-stability. Especially, compounds in which $R_1$ is a biphenylene group, $R_2$ is a phenylene group and X is $-OCH_2-$ in the formula (1) have an excellent property of a large tilt angle. Moreover, even compounds not showing a ferroelectric property have excellent properties such that when used as additives to ferroelectric liquid crystals, the spontaneous polarization is increased in liquid crystal compositions, the liquid crystal temperature range is expanded, coloration does not occur, and the chemical stability and photostability are not degraded. Alternatively, compounds not showing a ferroelectric property can be mixed with a compound showing the Sm*C phase and having no chiral group to provide a composition showing a chiral Sm*C phase. A liquid crystal composition comprising at least one compound selected from the compounds of the present invention has the above-mentioned characteristics and can be used as a liquid crystal for a birefringence-type cell as well as liquid crystal for a quest-host-type cell, and therefore, the liquid crystal composition is practically valuable.

## Claims

1. A mesomorphic compound having an alkyl β-hydroxycarboxylate as the chiral group, which is represented by the following general formula:

$$C_mH_{2m+1}O-R_1-X-R_2\overset{\overset{O}{\parallel}}{C}O^*\overset{\overset{R}{|}}{C}HCH_2\overset{\overset{O}{\parallel}}{C}OC_nH_{2n+1} \qquad (1)$$

wherein m is an integer of from 1 to 19, $R_1$ and $R_2$ stand for a phenylene group or a biphenylene group, X stands for $-OCH_2-$ or $-CH_2O-$, R stands for a methyl group or an ethyl group, n is an integer of from 2 to 12, and * indicates the asymmetric carbon.

2. A mesomorphic compound according to claim 1 wherein m is an integer of from 3 to 18 and n is an integer of from 3 to 10.

**3.** A liquid crystal composition comprising at least one mesomorphic compound having an alkyl β-hydroxycarboxylate as the chiral group, which is represented by the general formula (1) indicated in claim 1.

**4.** A liquid crystal composition according to claim 3 including a compound having a smectic C phase but having no chiral group.

**Revendications**

**1.** Composé mésomorphe, comportant un groupe β-hydroxycarboxylate d'alkyle en tant que groupe chiral, qui est représenté par la formule générale suivante:

$$C_mH_{2m+1}O-R_1-X-R_2\overset{\overset{O}{\|}}{C}O^{*}\overset{\overset{R}{|}}{C}HCH_2\overset{\overset{O}{\|}}{C}OC_nH_{2n+1} \quad (1)$$

dans laquelle m est un nombre entier allant de 1 à 19, $R_1$ et $R_2$ représentent le groupe phénylène ou biphénylène, X représente $-OCH_2-$ ou $-CH_2O-$, R représente le groupe méthyle ou éthyle, n est un nombre entier allant de 2 à 12, et * indique le carbone asymétrique.

**2.** Composé mésomorphe selon la revendication 1, dans lequel m est un nombre entier allant de 3 à 18 et n est un nombre entier allant de 3 à 10.

**3.** Composition de cristaux liquides comprenant au moins un composé mésomorphe, comportant un groupe β-hydroxycarboxylate d'alkyle en tant que groupe chiral, qui est représenté par la formule générale (1) indiquée dans la revendication 1.

**4.** Composition de cristaux liquides selon la revendication 3, comprenant un composé ayant une phase smectique C mais ne comportant pas de groupe chiral.

**Patentansprüche**

**1.** Mesomorphe Verbindung mit einem Alkyl-β-hydroxycaboxylat als chiraler Gruppe, entsprechend der folgenden allgemeinen Formel

$$C_mH_{2m+1}O-R_1-X-R_2\overset{\overset{O}{\|}}{C}O^{*}\overset{\overset{R}{|}}{C}HCH_2\overset{\overset{O}{\|}}{C}OC_nH_{2n+1} \quad (1)$$

worin m eine ganze Zahl mit einem Wert von 1 bis 19, $R_1$ und $R_2$ Phenylengruppen oder Biphenylengruppen, X eine Gruppe der Formel $-OCH_2-$ oder eine Gruppe der Formel $-CH_2O-$, R eine Methylgruppe oder eine Ethylgruppe, n eine ganze Zahl mit einem Wert von 3 bis 12, wenn X eine Gruppe der Formel $-CO_2-$ ist oder n eine ganze Zahl mit einem Wert von 2 bis 12 wenn X eine Gruppe der Formel $-OCH_2-$ oder $-CH_2O-$ ist, bedeuten, und das * das asymmetrische Kohlenstoffatom anzeigt.

**2.** Mesomorphe Verbindungen nach Anspruch 1, worin m eine ganze Zahl mit einem Wert von 3 bis 18 und n eine ganze Zahl mit einem Wert von 3 bis 10 bedeuten.

**3.** Flüssigkristallzusammensetzung umfassend mindestens eine mesomorphe Verbindung mit einem Alkyl-β-hydroxycarboxylat als chiraler Gruppe, mit der in Anspruch 1 angegebenen allgemeine Formel (1).

**4.** Flüssigkristallzubereitung nach Anspruch 3, enthaltend eine Verbindung mit einer smektischen C-Phase, jedoch keiner chiralen Gruppe.

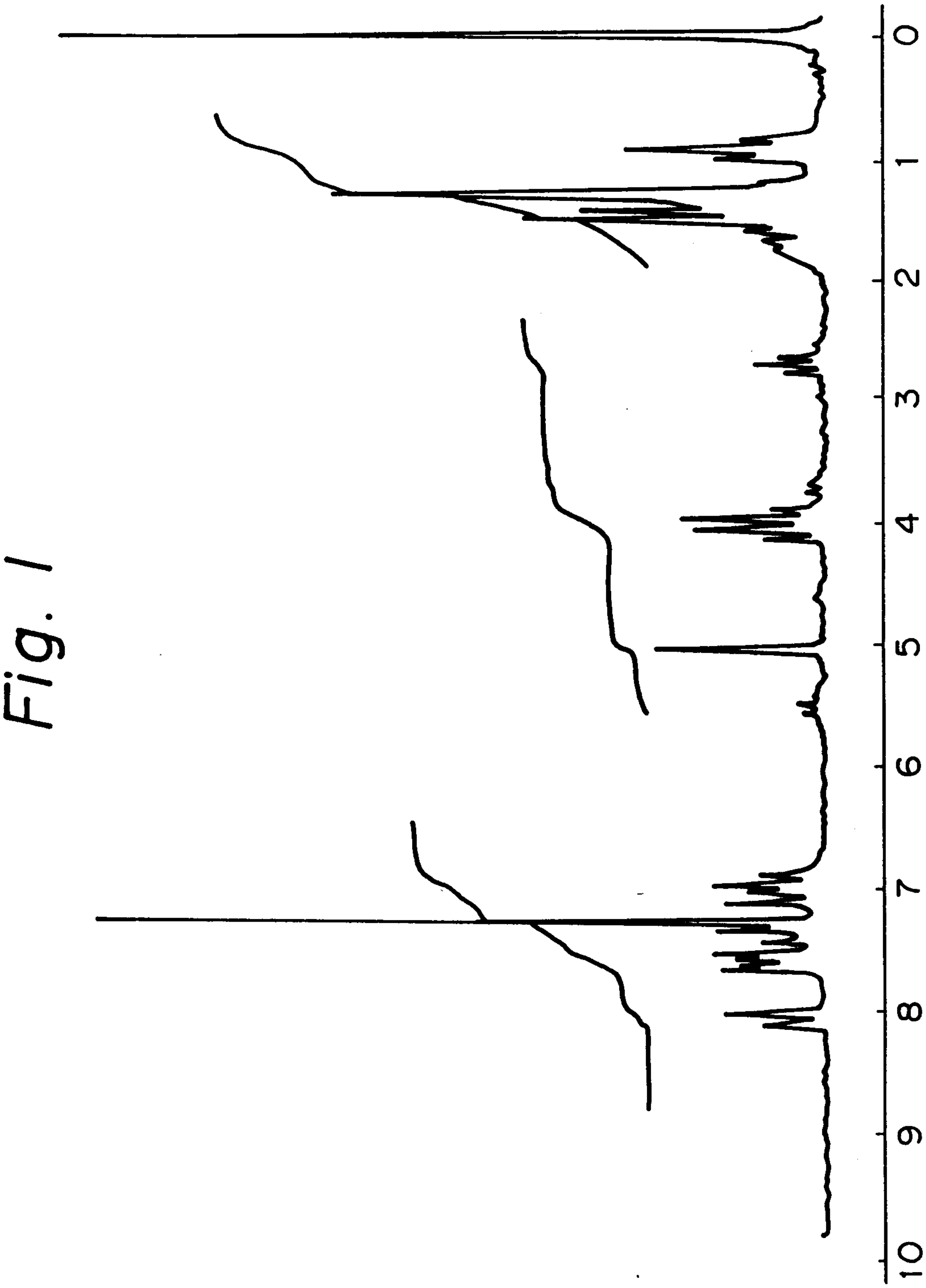


Fig. 1

Fig. 2

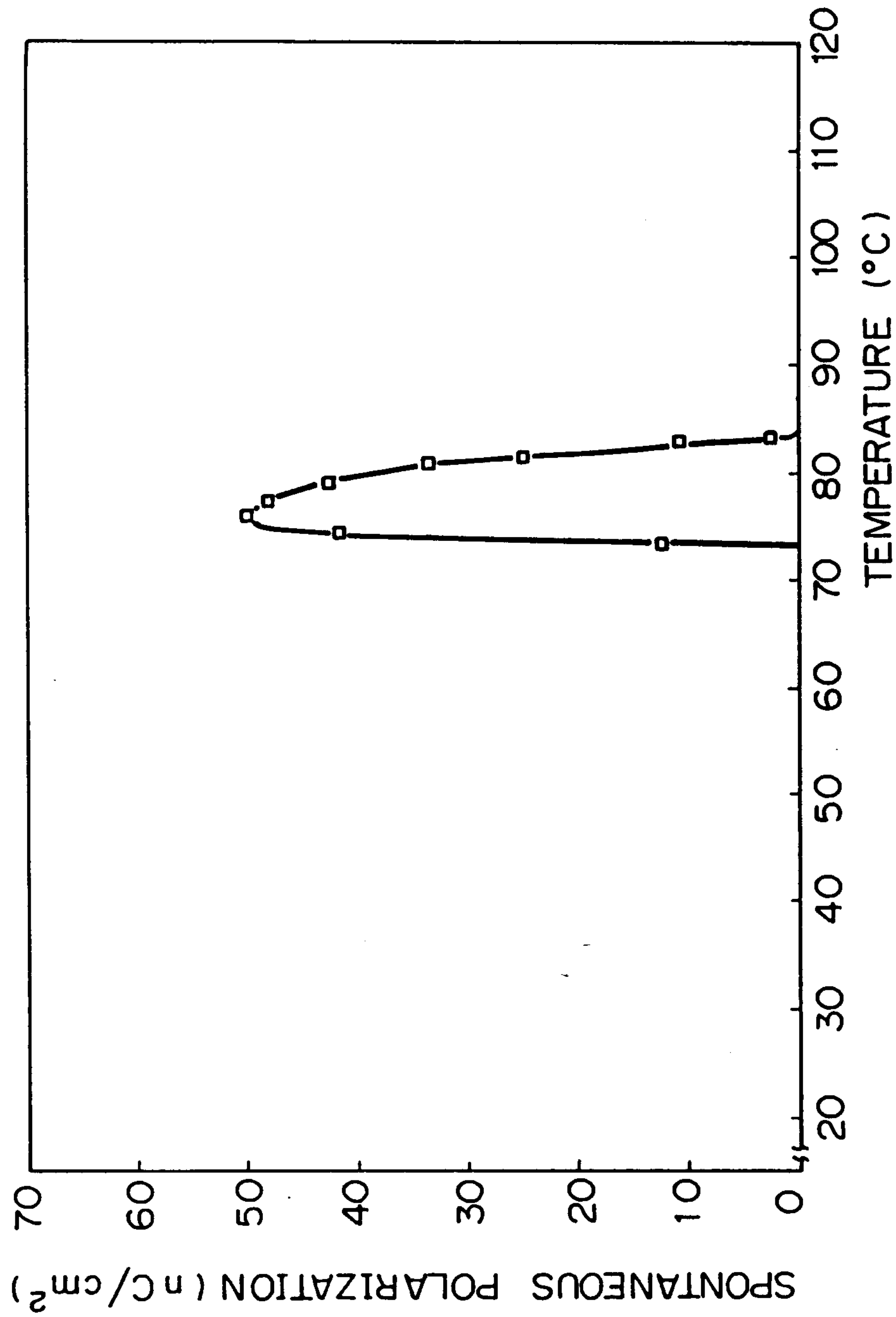
TEMPERATURE (°C)
SPONTANEOUS POLARIZATION ( n C/cm²)
20 30 40 50 60 70 80 90 100 110 120
0 10 20 30 40 50 60 70

Fig. 3

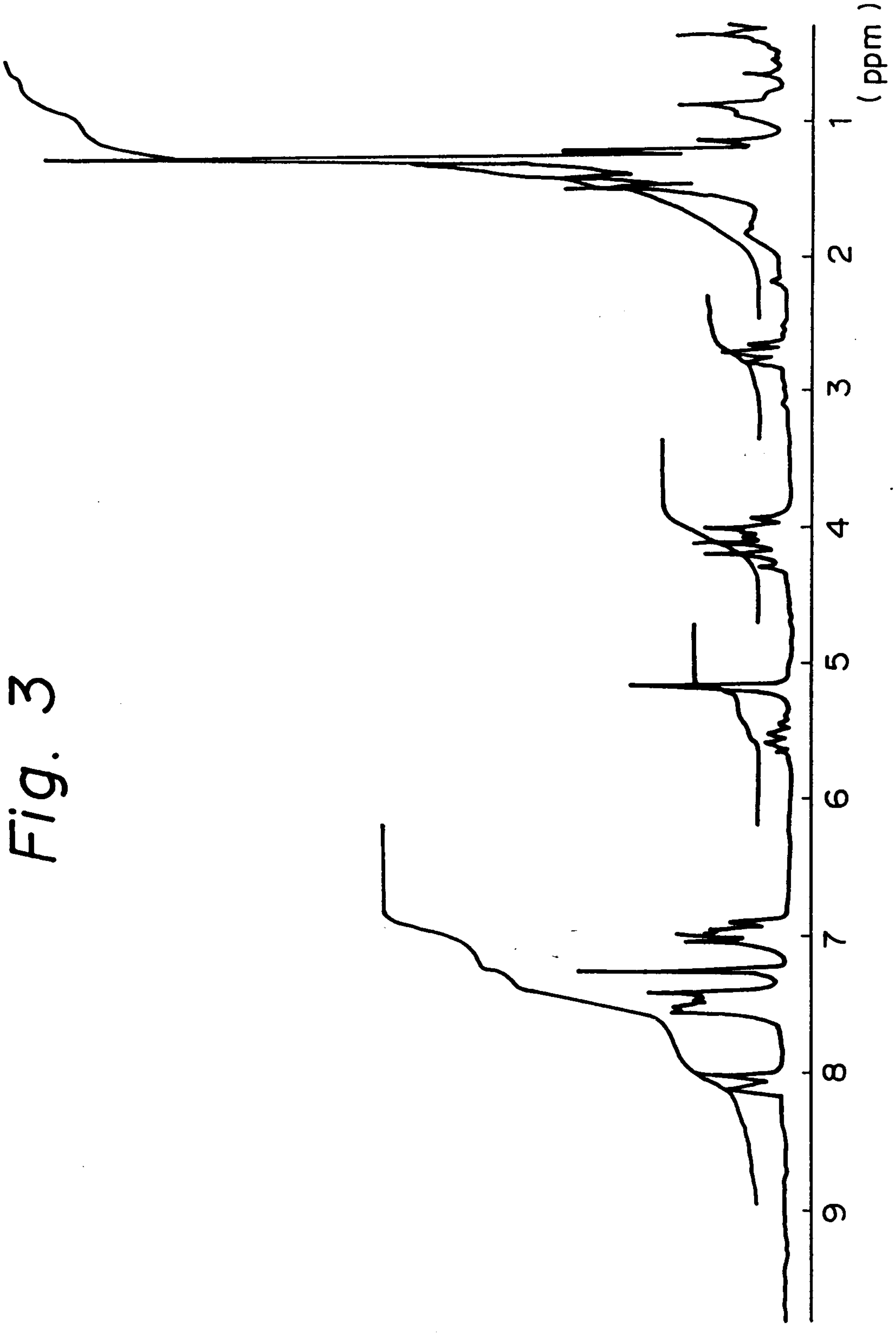

Fig. 4

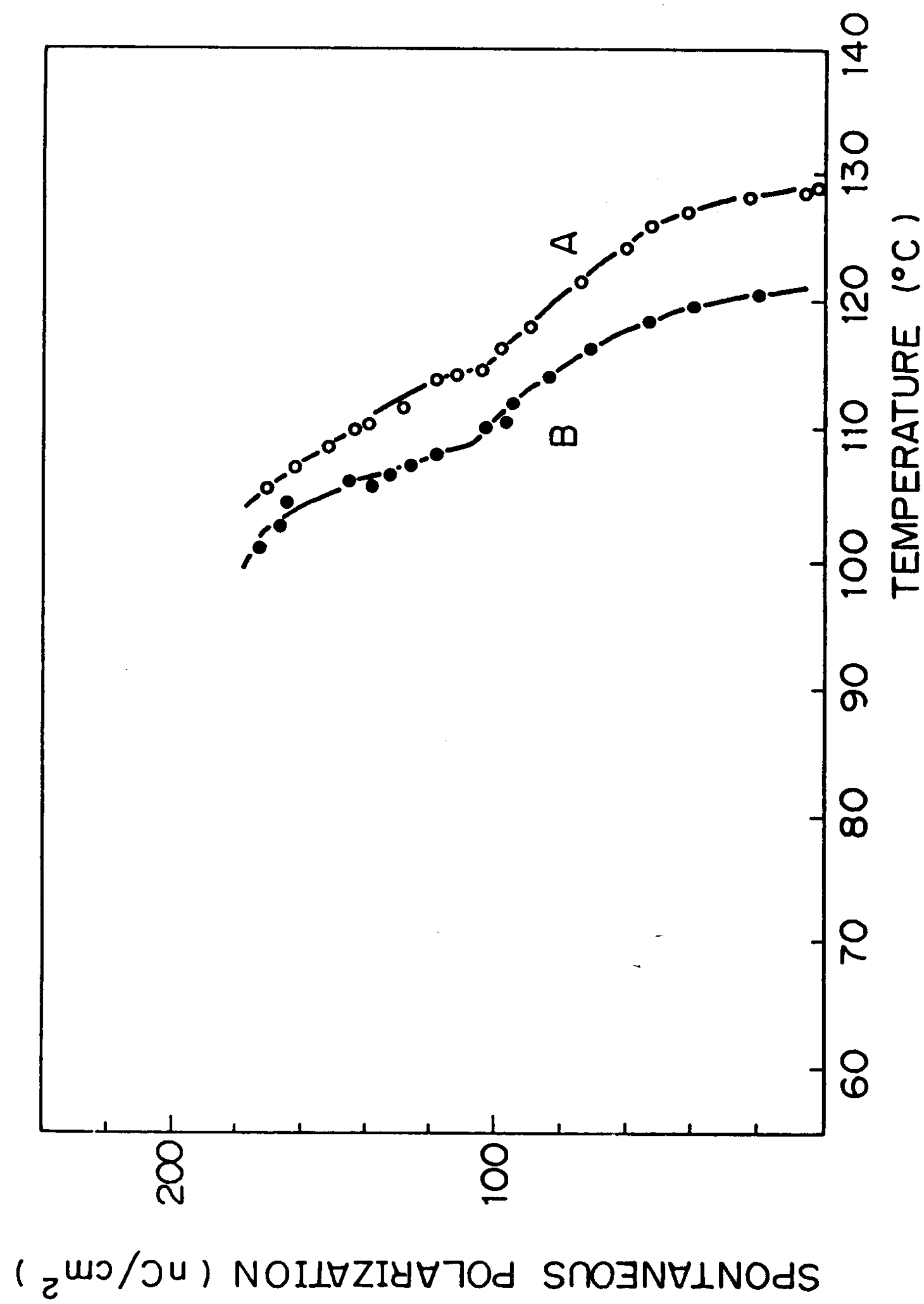
SPONTANEOUS POLARIZATION ( nC/cm2 )
200
100
TEMPERATURE (°C)
60
70
80
90
100
110
120
130
140
A
B

Fig. 5

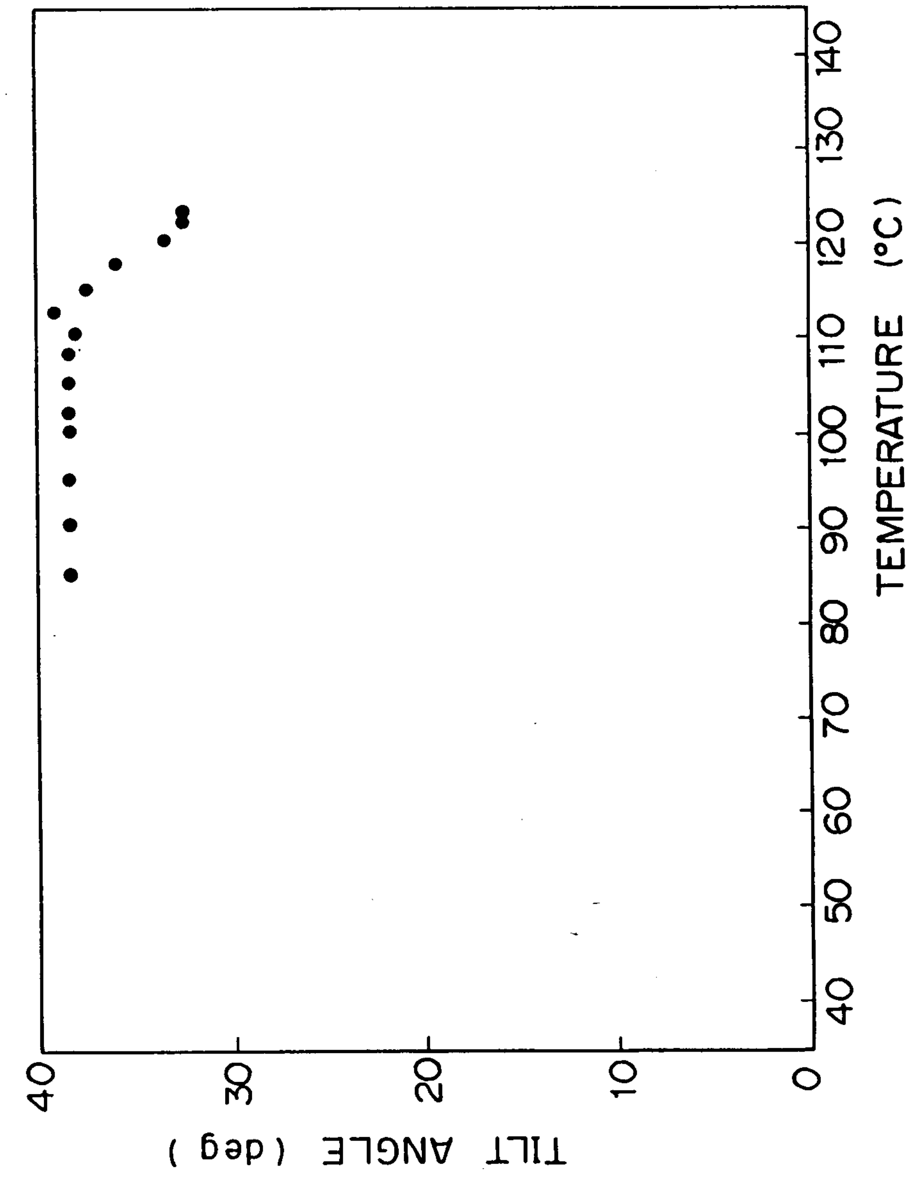
TILT ANGLE (deg)
0
10
20
30
40
TEMPERATURE (°C)
40
50
60
70
80
90
100
110
120
130
140

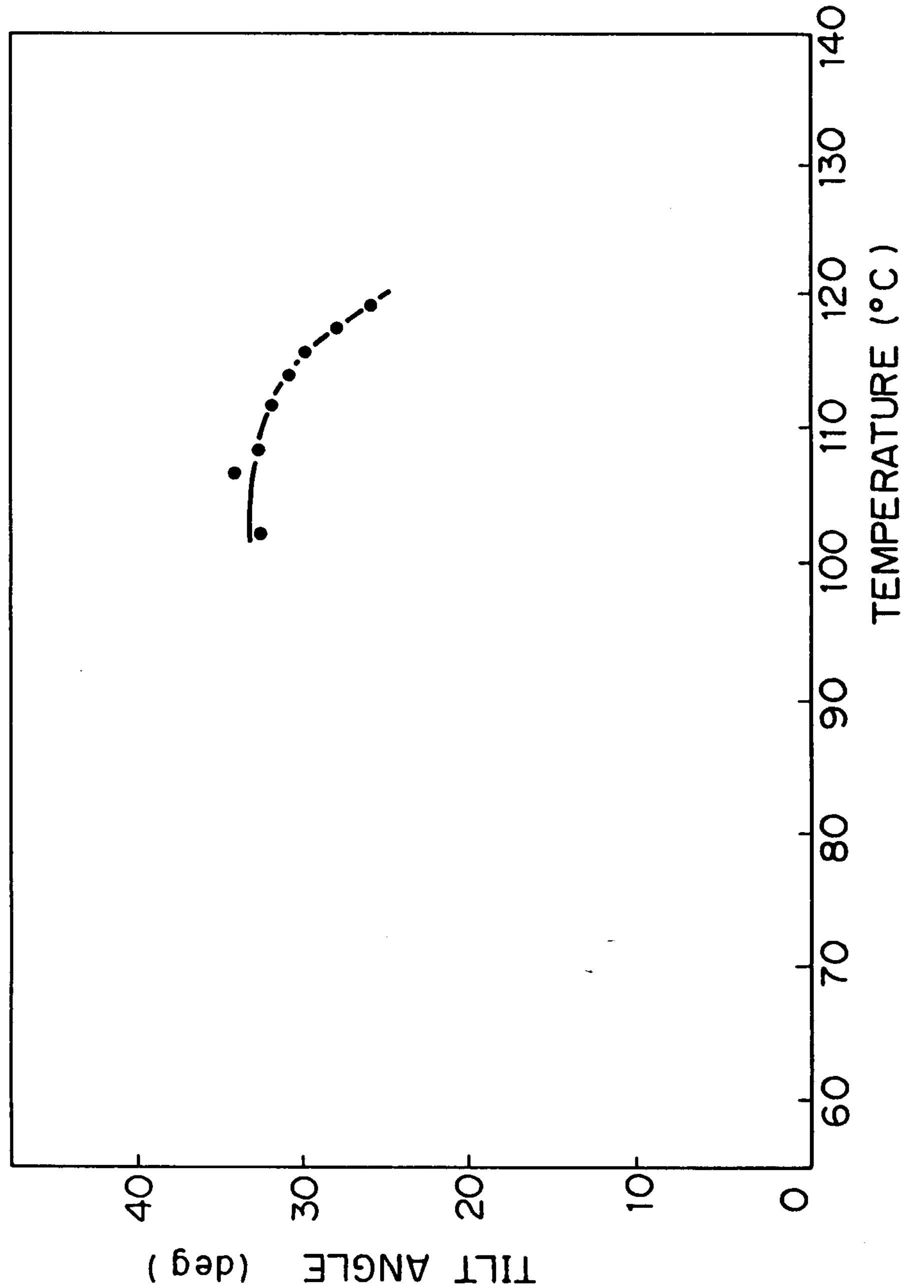
TILT ANGLE (deg)
0
10
20
30
40
60
70
80
90
100
110
120
130
140
TEMPERATURE (°C)

*Fig. 6*

Fig. 7

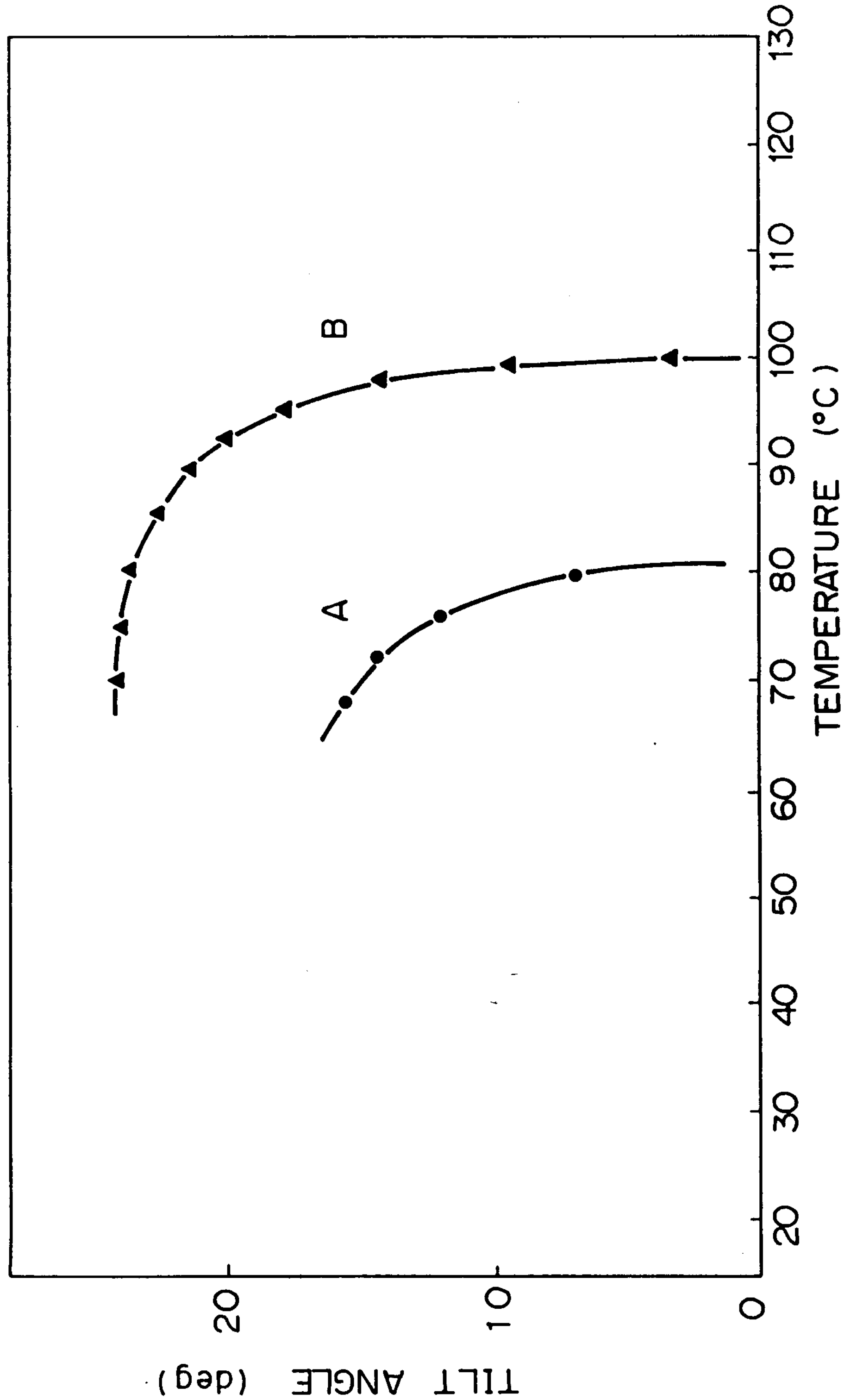
TILT ANGLE (deg)
0
10
20
TEMPERATURE (°C)
20
30
40
50
60
70
80
90
100
110
120
130
A
B

Fig. 8

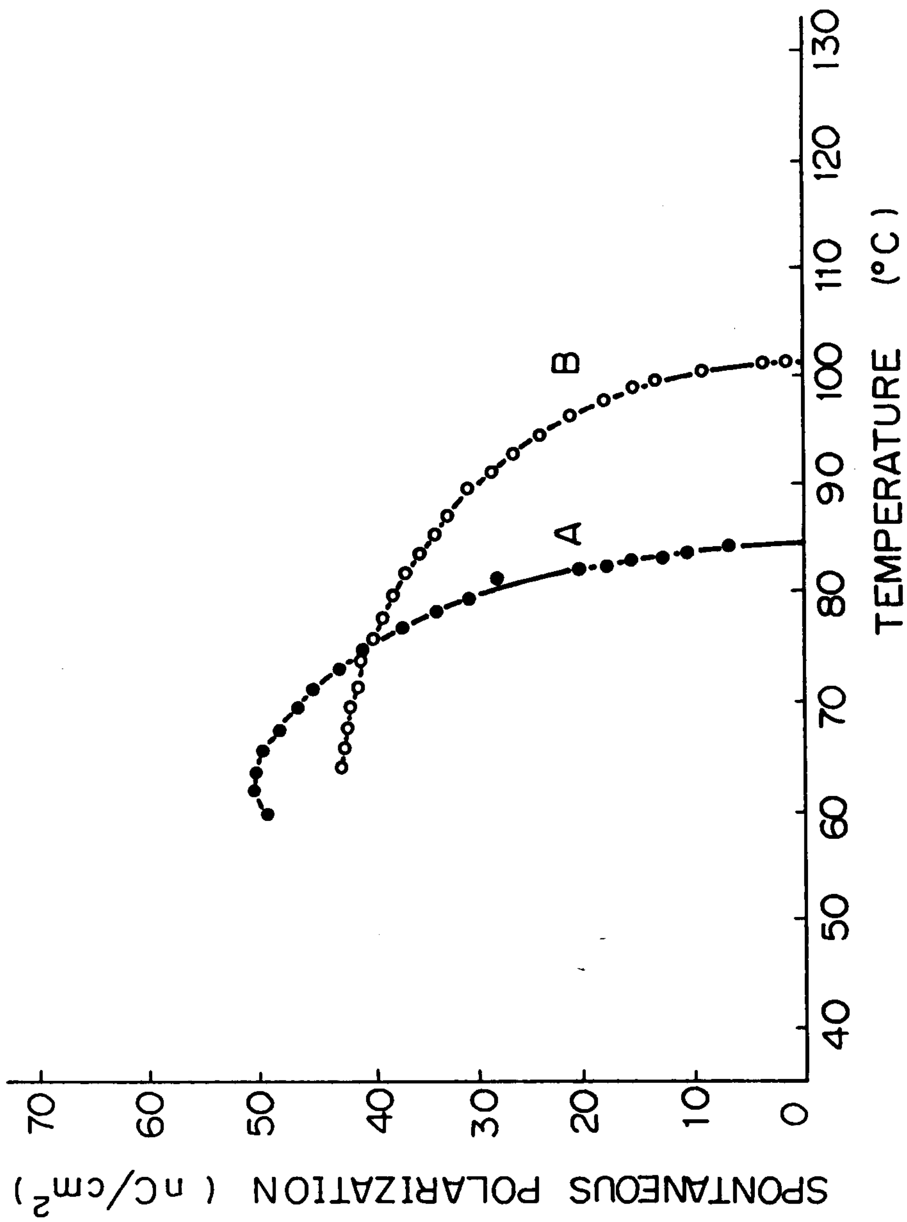
SPONTANEOUS POLARIZATION ( nC/cm2 )
0
10
20
30
40
50
60
70
TEMPERATURE (°C)
40
50
60
70
80
90
100
110
120
130
A
B

Fig. 9

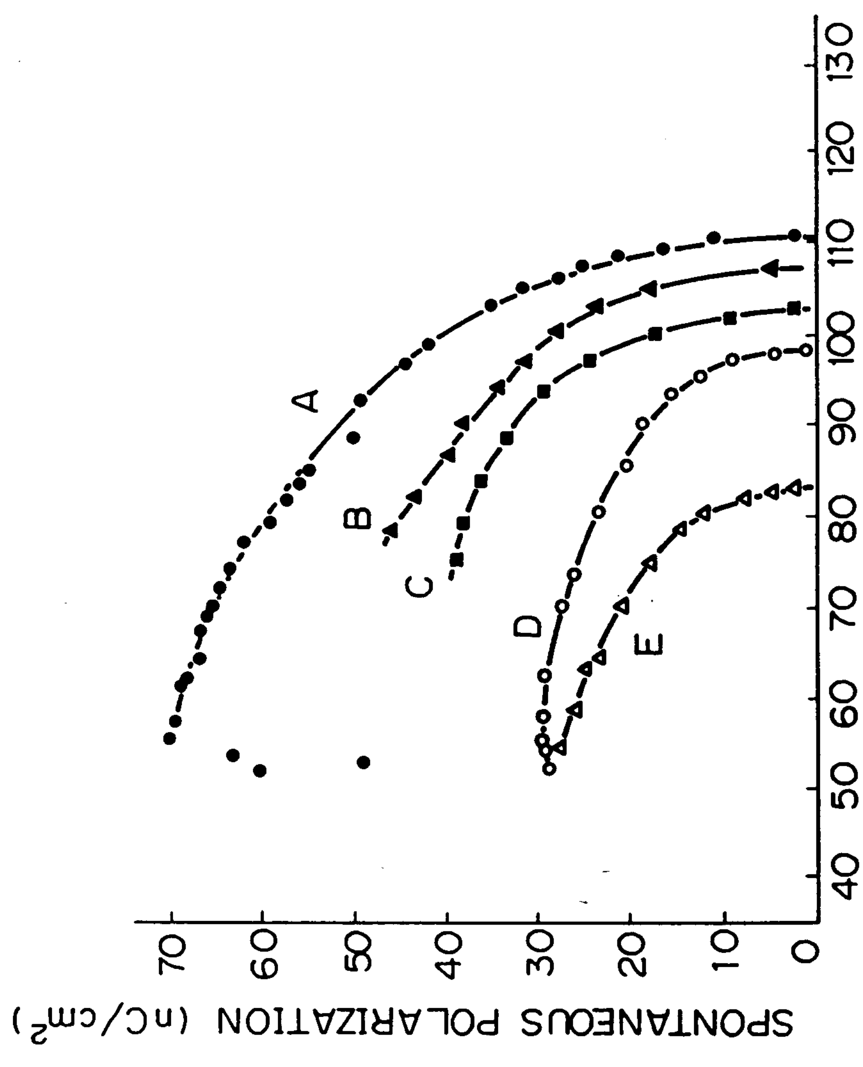
A
B
C
D
E
SPONTANEOUS POLARIZATION (nC/cm²)
0
10
20
30
40
50
60
70
TEMPERATURE (°C)
40
50
60
70
80
90
100
110
120
130

Fig. 10

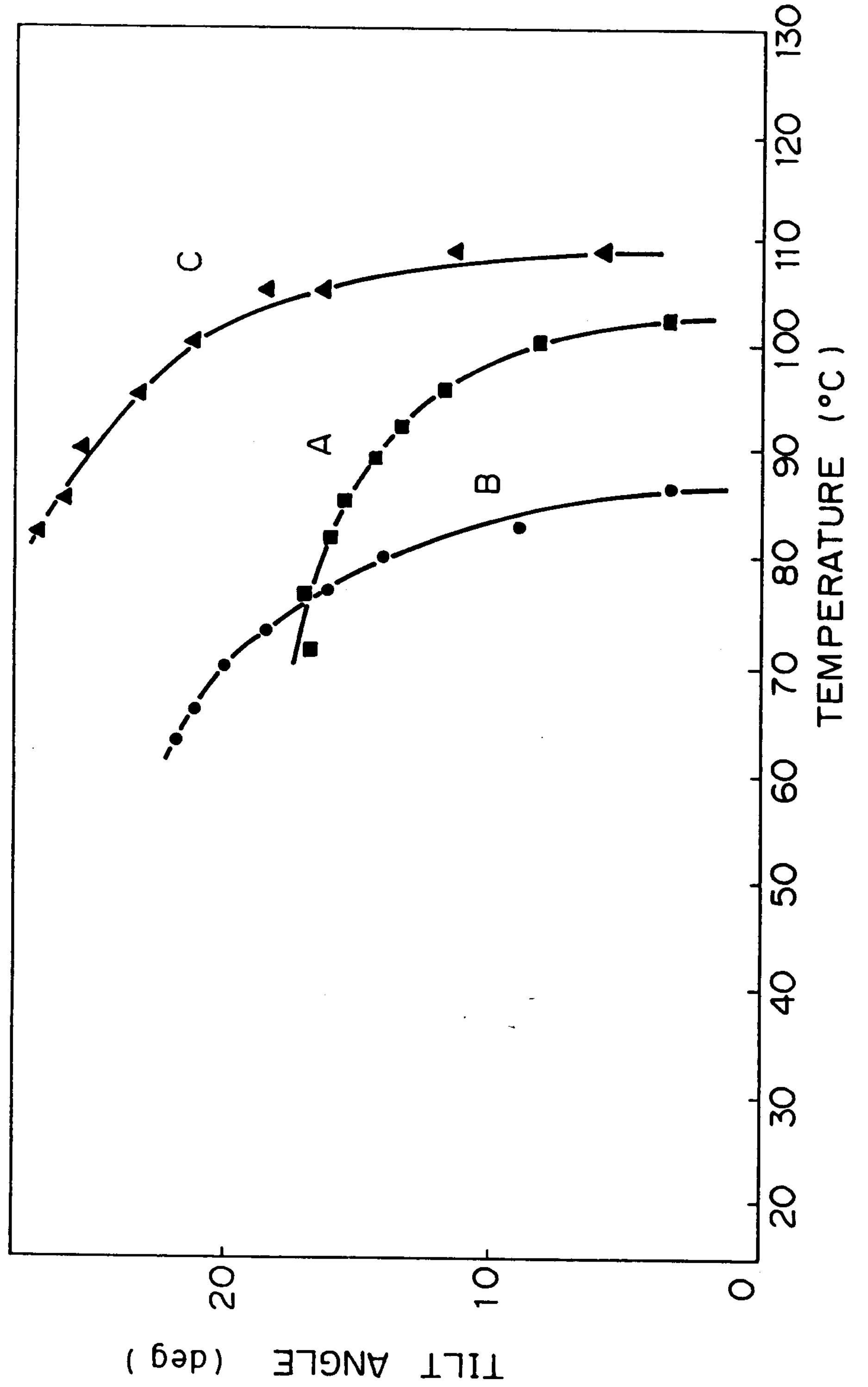
TILT ANGLE (deg)
0
10
20
TEMPERATURE (°C)
20
30
40
50
60
70
80
90
100
110
120
130
A
B
C